**Europäisches Patentamt**

(19) **European Patent Office**

**Office européen des brevets**

(11) Veröffentlichungsnummer: **0 211 977**
**B1**

(12) **EUROPÄISCHE PATENTSCHRIFT**

(45) Veröffentlichungstag der Patentschrift:
**08.03.89**

(21) Anmeldenummer: **85110172.5**

(22) Anmeldetag: **14.08.85**

(51) Int. Cl.⁴: **C03B 3/00**

(54) Verfahren und Vorrichtung zum Vorwärmen von Rohstoffen für die Glasherstellung, insbesondere eines Glasscherbengemenges.

(43) Veröffentlichungstag der Anmeldung:
**04.03.87 Patentblatt 87/10**

(45) Bekanntmachung des Hinweises auf die Patenterteilung:
**08.03.89 Patentblatt 89/10**

(84) Benannte Vertragsstaaten:
**AT BE CH DE FR GB IT LI LU NL SE**

(56) Entgegenhaltungen:
**DD-A- 141 017**
**DE-A- 2 905 089**
**DE-B- 1 235 528**
**FR-A- 769 923**
**GB-A- 904 807**
**US-A- 4 225 332**
**US-A- 4 311 502**
**US-A- 4 349 367**

(73) Patentinhaber: **Himly, Holscher GmbH & Co., Gr.**
**Drakenburg Strasse 132, D-3070 Nienburg(DE)**

(72) Erfinder: **Roloff, Helmut, Schlieshof 8,**
**D-3070 Nienburg(DE)**

(74) Vertreter: **Bolte, Erich, Dipl.-Ing. et al, Hollerallee 73,**
**D-2800 Bremen 1(DE)**

**Beschreibung**

Die Erfindung betrifft ein Verfahren zum Vorwärmen eines vorzugsweise mit Rohstoffen zur Glasherstellung angereicherten Glasscherbengemenges, gemäß dem Oberbegriff des Anspruchs 1 (GB-A 904 807). Des weiteren betrifft die Erfindung eine insbesondere zur Durchführung des erfindungsgemäßen Verfahrens dienende Vorrichtung gemäß dem Oberbegriff des Anspruchs 12.

Der Glasherstellungsprozeß, insbesondere die Erhitzung der dazu notwendigen Rohstoffe, und insbesondere des Glasscherbengemisches, welches bis zu 90% des Rohstoffanteils bei der Glasherstellung ausmachen kann, ist recht energieintensiv. Dabei geht ein erheblicher Teil der notwendigen Energie dadurch verloren, daß die bei der Verbrennung entstehenden Abgase noch eine Temperatur von etwa 1.400°C aufweisen.

Bekannt ist aus der GB-A 904 807 ein in zwei Bereiche unterteilter Glasschmelzofen. In einem oberen Bereich erfolgt die Beschickung des Glasschmelzofens mit unter anderem auch Glasscherben enthaltenden Pellets. Gleichzeitig werden in diesem Bereich, also während der Beschickung des Glasschmelzofens, die Pellets mit unmittelbar aus der im unteren Bereich des Glasschmelzofens angeordneten Glasschmelzwanne kommenden Abgasen vorgewärmt. Hieran ist nachteilig, daß die Pellets nur während der relativ kurzen Beschickungsphase im oberen Bereich des Glasschmelzofens vorgewärmt werden können. Deswegen ist auch eine Vorwärmung mit relativ heißen Abgasen, die direkt von der Glasschmelzwanne zu den vorzuwärmenden, Pellets geführt werden, notwendig. Gleiches trifft für die DE-B 1 235 528 zu, bei der ein pulverförmiges Glasgemenge, das ausschließlich aus Glasrohstoffen besteht, von direkt aus der Glasschmelzwanne kommenden Abgasen vorgewärmt wird.

Weiter ist es aus der DE-A 2 905 089 bereits bekannt, zum Vorwärmen von Glasrohstoffen, die keine Glasscherben enthalten, zwischengekühlte Abgase zu verwenden. Da pulverförmige Glasrohstoffe sich leichter vorwärmen lassen als (grobkörnige) Glasscherben, erfolgt bei dieser bekannten Vorrichtung die Beaufschlagung der Glasrohstoffe mit den zwischengekühlten Abgasen in einem Vorwärmer, durch den die Glasrohstoffe relativ schnell hindurchgeleitet werden. Für eine Vorwärmung eines Glasscherbengemenges aus Glasrohstoffen und einem erheblichen Anteil eines Glasscherbengemisches mit vorgekühlten Abgasen ist diese bekannte Vorrichtung wegen der kurzen Verweilzeit des Glasscherbengemenges im Vorwärmer nicht geeignet.

Hiervon ausgehend, liegt der Erfindung die Aufgabe zugrunde, ein Verfahren und eine Vorrichtung zum gleichmäßigen und wirksamen Vorwärmen eines vorzugsweise mit Rohstoffen zur Glasherstellung angereicherten Glasscherbengemenges durch vorgekühlte Abgase aus einem Glasschmelzofen zu schaffen.

Zur Lösung dieser Aufgabe weist das erfindungsgemäße Verfahren die kennzeichnenden Merkmale des Anspruchs 1 auf. Dabei ist es besonders zweckmäßig, das Abgas in einem Bunker durch das Glasscherbengemenge hindurchzuleiten, und zwar durch entsprechende Strömungskanäle im Bunker. Durch eine kontinuierliche Entnahme des Glasscherbengemenges aus dem Bunker entsteht in demselben ein langsam abwärts fließender Glasscherbenfluß. Es findet auf diese Weise eine Vorwärmung der Glasscherben während der gesamten Durchflußzeit derselben durch den Bunker statt. Mit diesem Verfahren ist so eine intensive Vorwärmung des Bunkerinhalts möglich unter Ausnutzung der (Rest-)Wärme der Abgase.

Es ist vorteilhaft, die Abgase im Kreuzgegenstrom durch das Glasscherbengemenge im Bunker zu leiten, wodurch das noch mit einer hohen Temperatur in den Bunker eintretende Abgas die schon teilweise vorgewärmten Glasscherben wirkungsvoll weitererwärmen kann, während das zum Teil abgekühlte Abgas im oberen Bereich des Bunkers die dort eintretenden, noch kalten Glasscherben langsam anwärmt.

Zweckmäßigerweise besitzen die bereits zum Vorwärmen der Frischluft benutzten Abgase nur noch eine Restwärme von 600–400°C. Diese reicht aus, um das Glasscherbengemisch im Bunker auf bis zu 380°C vorzuwärmen, wobei die Abgase auf eine Temperatur von unter 100°C abgekühlt sind, wenn sie den Vorwärmbunker verlassen. Die Abgase sind nach der Glasscherbenvorwärmung also bis nahezu auf Raumtemperatur abgekühlt, d.h. die im Abgas enthaltene Wärmeenergie ist größtenteils zur Glasscherbenvorwärmung genutzt worden.

Wenn – nachdem die Abgase den Wärmeaustauscher zur Frischlufterwärmung durchlaufen haben – die Restwärme nicht zur vorgesehenen Vorwärmung der Glasscherben im Bunker ausreichen sollte, sieht die Erfindung vor, direkt von der Glasschmelzwanne des Glasschmelzofens kommendes Abgas mit einer Temperatur von bis zu 1400°C dem teilweise heruntergekühlten Abgas zuzumischen. Hierdurch läßt sich die Vorwärmung der Glasscherben wirkungsvoll auf eine vorgesehene Temperatur regeln.

Die Abgase werden beim Vorwärmen der Glasscherben durch an denselben anhaftende Stoffe verunreinigt. Deswegen müssen aus Gründen des Emissionsschutzes die kalten Abgase gereinigt werden, bevor diese an die Umgebung abgegeben werden. Da dieses aus erfahrungstechnischen Gründen nicht mit der üblicherweise erfolgenden Reinigung der wärmeren Abgase, die nicht zur Vorwärmung der Glasscherben benötigt werden, erfolgen kann, sieht die Erfindung hierzu ein separates Verfahren vor. Demnach werden die aus dem Vorwärmbunker kommenden, kalten Abgase durch einen Naßwäscher geleitet, in dem sie von einer Waschflüssigkeit berieselt werden, und zwar vorzugsweise ebenfalls im Gegenstromverfahren. Hierbei werden einerseits Feststoffe aus dem Abgas ausgefällt und andererseits gasförmige Schadstoffe, beispielsweise Schwefel- und/oder Stickstoff-Sauerstoff-Verbindungen, kondensiert. Die dabei entstehenden Schadstoffkondensate vermengen sich mit der Waschflüssigkeit. Um diese aus letzterer zu entfernen, wird des weiteren verfahrensmäßig vorgeschlagen, in einem Sammelbehälter der Waschflüssigkeit ein Neutralisationsmittel, beispielsweise Kalkmilch und/oder Ammoniak, zuzusetzen. Dadurch wird die Schwefelsäure bzw. schwefelige Säure neutralisiert sowie die Bindung von Stickstoff-Oxid-Verbindungen gefördert. Der Neutralisations-Klärschlamm wird im Sammelbehälter, der beispielsweise als Prallabscheider ausgebildet sein kann, dekantiert und abgezogen. Auf diese Weise ist es möglich, das Waschwasser im Naßabscheider in einem geschlossenen Kreislauf zu führen, weil das bei der Reinigung des Abgases mit Fremdstoffen angereicherte Waschwasser kontinuierlich regeneriert wird, bevor es erneut mit dem Abgas in Verbindung gebracht wird. Auch das Abgas kann dem Abgaskanal wieder zugeführt werden, da diesem die Schadstoffanreicherungen bei der Vorwärmung der Glasscherben im wesentlichen im Naßwäscher entzogen worden sind.

Schließlich betreffen weitere verfahrensmäßige Unteransprüche Maßnahmen zur Verbesserung des Reinigungsvorgangs im Naßwäscher.

Die Vorrichtung zur Lösung der erfindungsgemäßen Aufgabe weist die kennzeichnenden Merkmale des Anspruchs 12 auf.

Demnach ist eine obere Hälfte des Strömungskanals aus einem dachartigen, länglichen Einbau im Bunker gebildet. Dieser kann beispielsweise aus einem gleichschenkligen Winkelprofil bestehen, welches derart zwischen zwei parallelen Seitenwänden des Bunkers angeordnet ist, daß es nach unten offen ist. Diese dachförmigen Winkelprofile bilden im Bunker eine Schikane für das Glasscherbengemisch. Dieses bildet dadurch zwangsläufig die zweite, untere Hälfte der Strömungskanäle durch den sich unter den Winkelprofilen ausbildenden Schüttkegel des Glasscherbengemisches. Erfindungsgemäß entstehen so die Strömungskanäle mit einem Minimum an konstruktivem Aufwand. Im Gegensatz zu Strömungskanälen, die – was auch alternativ möglich ist – aus perforierten Rohren hergestellt sind, können die durch den Schüttkegel des Glasscherbengemisches teilweise gebildeten Strömungskanäle praktisch nicht verstopfen. Sie sind darüber hinaus sehr leicht zu reinigen, weil bei entleertem Bunker die Winkelprofile von unten leicht zugänglich sind. Darüber hinaus bieten die erfindungsgemäßen Strömungskanäle eine relativ große Angriffsfläche für die Abgase, da im Prinzip die halbe, nämlich untere Fläche eines jeden Strömungskanals vom vorzuwärmenden Glasscherbengemisch gebildet ist. Durch das kontinuierlich in langsamem Fluß von oben nach unten durch den Bunker fließende Glasscherbengemisch bilden stets andere Glasscherben einen Strömungskanal, wodurch der größte Teil der Glasscherben kurzfristig direkt mit dem Abgas in Kontakt kommt. Die Glasscherben der unteren Hälfte eines jeden Strömungskanals bilden eine rauhe, gasdurchlässige Wandung, die für eine gute Verwirbelung des Abgases im Strömungskanal sorgt und einen Gasstrom zwischen den Scherben hindurch ermöglicht.

Zweckmäßigerweise sind im Bunker mehrere horizontale Kanalebenen aus einer Mehrzahl von parallel zueinander verlaufenden Strömungskanälen angeordnet. Die Verteilung der einzelnen Strömungskanäle auf jede Kanalebene ist dabei derart getroffen, daß die Strömungskanäle benachbarter Kanalebenen versetzt zueinander sind, d.h. die Strömungskanäle auf "Lücke" liegen. Auf diese Weise stellt sich im Bunkerinneren ein über den gesamten Bunkerquerschnitt homogener Abgasstrom ein. Hierdurch wird das Glasscherbengemisch zwangsläufig gleichmäßig vorgewärmt, ohne daß sich im Bunker Nester mit erhöhter Vorwärmtemperatur des Glasscherbengemisches bilden. Auch wird so eine partielle Überhitzung der Glasscherben und ein Verbacken derselben verhindert.

Die Verbindung der einzelnen Strömungskanäle im Bunker untereinander erfolgt durch Überströmkanäle, durch die das Abgas von einer Kanalebene in die andere strömen kann. Vorzugsweise ist jeder der gegenüberliegenden Stirnseiten der Strömungskanäle ein Überströmkanal zugeordnet. Dadurch kann das von einer unteren Kanalebene ankommende Abgas durch einen Überströmkanal hochströmen in eine höher gelegene Kanalebene und dort an einer Stirnseite in die Strömungskanäle eintreten, durch diese hindurchfließen und an der gegenüberliegenden Stirnseite wieder aus den Strömungskanälen austreten zum Hochströmen in eine nächst höhergelegene Kanalebene. Auf diese Weise strömt das Abgas nach einem trapezförmigen Verlauf durch den Bunker.

Bei einem besonders vorteilhaften Ausführungsbeispiel sind die Überströmkanäle im Inneren des Bunkers angeordnet, und zwar an den den Stirnseiten der Winkelprofile für die Strömungskanäle zu gerichteten Stirnseiten. Die so angeordneten Überströmkanäle sind einfach nach einem weiteren Vorschlag der Erfindung dadurch herzustellen, indem U-Profile mit ihrer offenen Seite an den Seitenwandungen von innen befestigt werden. Alternativ können die Überströmkanäle auch außerhalb des Bunkers angeordnet sein, indem entsprechende Öffnungen für die Abgase in den Bunkerseitenwänden angeordnet und durch entsprechende Rohre miteinander verbunden sind.

Es wird weiterhin vorgeschlagen, jedem Strömungskanal der oberen und unteren Kanalebene im Bunker eine eigene Abgaszufuhr- bzw. Abgasabfuhrleitung zuzuordnen. Durch die Verbindung aller Strömungskanäle mit denselben der angrenzenden Kanalebenen entstehen so im Bunker mehrere vertikale Strömungskreisläufe für die Abgase. Dadurch wird ein ausreichend großer Abgasdurchsatz durch den Bunker geschaffen zur wirkungsvollen Vorwärmung des Glasscherbengemisches. Zur weiteren Steigerung des Abgasdurchsatzes durch den Bunker kann in der Abgaszufuhrleitung zum Bunker ein Gebläse, insbesondere ein Heißluftgebläse, angeordnet sein.

Weitere vorrichtungsbezogene Merkmale der Erfindung betreffen die konstruktive Ausbildung des Naßwäschers, insbesondere der darin angeordneten Desintegratoren.

Zwei Ausführungsbeispiele der Erfindung werden nachfolgend anhand der Zeichnung näher erläutert.

Es zeigen:

Fig. 1 eine schematische Darstellung eines Schmelzofens mit dem Verlauf einer Abgasleitung;

Fig. 2 eine schematische Darstellung einer Vorrichtung zum Vorwärmen eines Glasscherbengemisches;

Fig. 3 eine perspektivische Darstellung eines teilweise geschnittenen Bunkers, der zum Teil mit einem Glasscherbengemisch gefüllt ist;

Fig. 4 eine perspektivische Darstellung eines zweiten Ausführungsbeispiels eines Bunkers;

Fig. 5 einen vertikalen Teilschnitt durch den vollständig mit Glasscherben gefüllten Bunker; und

Fig. 6 eine perspektivische Darstellung eines teilweise geschnittenen Naßwäschers.

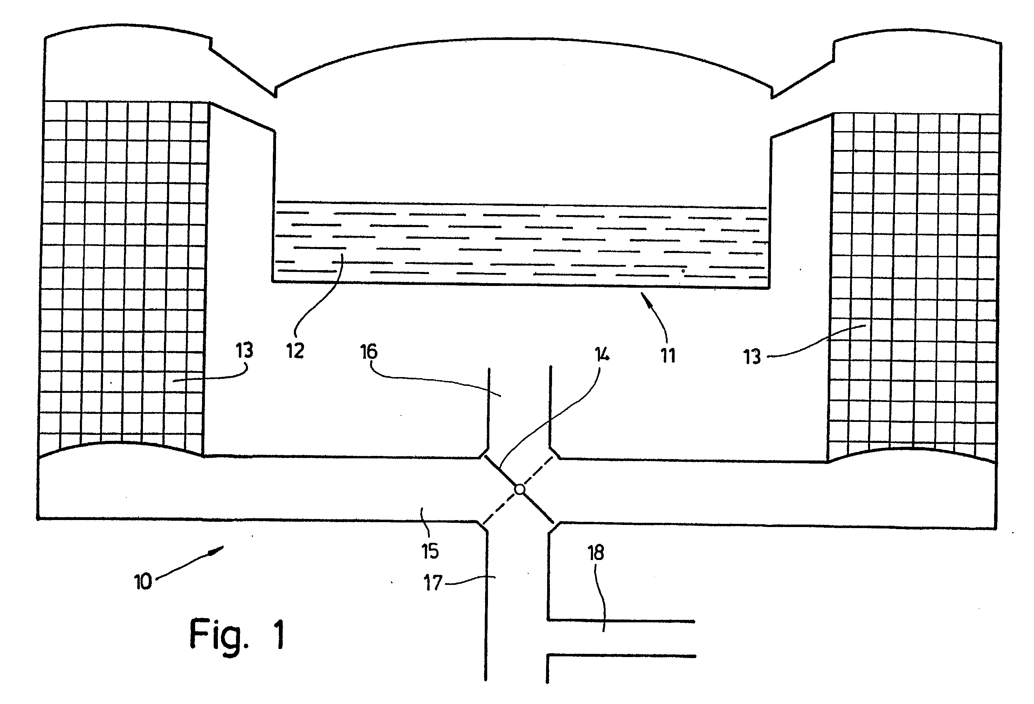

Bei den nachfolgend beschriebenen Ausführungsbeispielen der Erfindung erfolgt die Vorwärmung der Rohstoffe für die Glasherstellung durch die Abgase eines in der Fig. 1 schematisch dargestellten Glasschmelzofens 10. Der Glasschmelzofen 10 weist hier eine Schmelzwanne 11 auf, in der die Glasschmelze 12 von oben direkt beheizbar ist. Bei der gezeigten Anordnung sind der Schmelzwanne 11 zwei Regeneratoren 13 zugeordnet, die abwechselnd entweder von dem Abgas aus der Schmelzwanne 11 oder frischer Verbrennungsluft durchströmt werden. Dabei wird jeweils einer der beiden Regeneratoren 13 von dem mit in etwa 1400°C die Schmelzwanne 11 verlassenden Abgas so weit aufgeheizt, daß hinter dem Regenerator 13 das Abgas nur noch eine Temperatur von etwa 400–600°C aufweist. Während einer der Regeneratoren 13 aufgeheizt wird, erfolgt im zweiten Regenerator 13 die Vorwärmung der kalten Verbrennungsluft auf in etwa 1250°C. Eine schwenkbare Steuerklappe 14 in den zu den Regeneratoren 13 führenden Versorgungsleitungen 15 dient zur Umsteuerung der Gaszufuhr bzw. Gasabfuhr, wenn die Regeneratoren 13 umgesteuert werden sollen vom Aufheizen zum Vorwärmen der Frischluft und umgekehrt. Dazu münden in der unteren, die Regeneratoren 13 verbindenden Versorgungsleitung 15 eine Frischluftzufuhrleitung 16 und ein Abgaskanal 17. Von vorgenanntem Abgaskanal 17 zweigt eine Abgaszufuhrleitung 18 ab, mit der den vorzuwärmenden Rohstoffen für die Glasherstellung Abgase aus dem Glasschmelzofen 10, nämlich der Schmelzwanne 11 desselben, zugeführt werden.

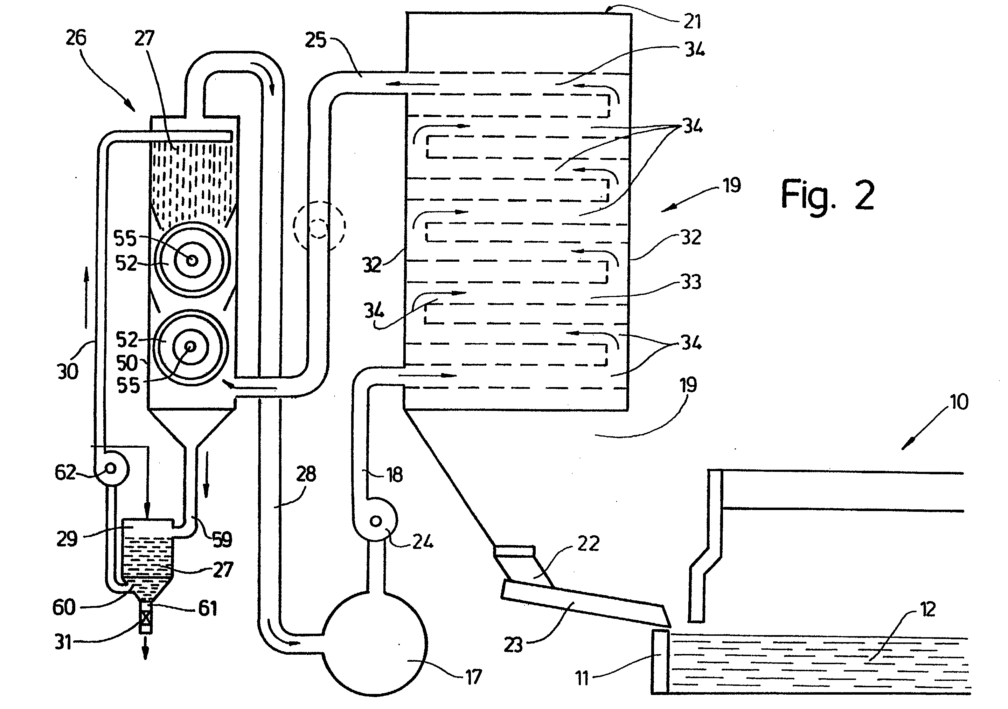

Die Fig. 2 zeigt eine erfindungsgemäße Vorrichtung zum Vorwärmen eines in einem Bunker 19 zwischengelagerten Glasscherbengemenges 20. Ein solches aus zerbrochenem Altglas hergestelltes Glasscherbengemenge 20 dient als Rohstoff für die Glasherstellung. Dabei kann der Anteil dieses Glasscherbengemenges 20 am Gesamtrohstoff bis zu 90% betragen. Dem Bunker 19 wird das Glasscherbengemenge 20 kontinuierlich oder auch diskontinuierlich durch eine obere Öffnung 21 zugeführt. Durch einen unteren Auslauf 22 ist das Glasscherbengemenge 20 dem Bunker 19 vorzugsweise kontinuierlich zu entnehmen, wobei es über eine Schwingrinne 23 oder einen ähnlichen Stetigförderer der Schmelzwanne 11 zuführbar ist. Auf diese Weise entsteht im Bunker 19 ein annähernd kontinuierlicher Fluß des Glasscherbengemenges 20 von oben nach unten.

Erfindungsgemäß erfolgt die Vorwärmung des Glasscherbengemenges 20 im Bunker 19. Dazu mündet in einem unteren Bereich des Bunkers 19 die vom Abgaskanal 17 kommende Abgaszufuhrleitung 18, wobei im vorliegenden Ausführungsbeispiel zwischen dem Abgaskanal 17 und dem Bunker 19 ein Heißluftgebläse 24 angeordnet ist zum Einblasen des Abgases in den Bunker 19. Nachdem dieser vom Abgas von unten nach oben zickzackförmig im Gegenstrom durchströmt ist, verläßt das Gas den Bunker 19 in einem oberen Bereich durch eine Abgasabfuhrleitung 25.

Beim Hindurchströmen des Abgases durch den Bunker 19 erfolgt die Vorwärmung des Glasscherbengemisches 20 auf eine Temperatur von bis zu 380°C. Dabei erfährt das Abgas eine Abkühlung auf eine Temperatur von weit unter 100°C.

Das durch die Abgaszufuhrleitung 25 aus dem Bunker 19 austretende, abgekühlte Abgas gelangt – wie die Fig. 2 des weiteren zeigt – anschließend in einen Naßwäscher 26. In diesem wird das unten eintretende Abgas von oben, also ebenfalls im Gegenstrom, von einer Waschflüssigkeit 27 berieselt zum Entfernen bzw. Kondensieren der sich beim Vorwärmen des Glasscherbengemisches 20 im Abgas ansammelnden Fremdstoffe. Nach dem Reinigen tritt das Abgas schließlich oben aus dem Naßwäscher 26 heraus, von wo es über eine Verbindungsleitung 28 dem Abgaskanal 17 wieder zugeführt wird. Auf diese Weise kommt ein geschlossener Abgaskreislauf zustande.

Auch die Waschflüssigkeit 27 im Naßwäscher 26 wird in einem geschlossenen Kreislauf geführt. Dazu gelangt die sich unten im Naßwäscher 26 sammelnde Waschflüssigkeit 27, die mit Schadstoffen aus dem Abgas angereichert ist, zunächst in einen zur Neutralisation der Waschflüssigkeit 27 dienenden Umlaufsammelbehälter 29. Diesem werden entweder kontinuierlich oder diskontinuierlich Neutralisationsmittel, beispielsweise Kalkmilch und/oder Ammoniak, zugeführt. Nach der Neutralisation bzw. Reinigung der Waschflüssigkeit 27 im Umlaufsammelbehälter 29 gelangt die Waschflüssigkeit 27 durch eine Zulaufleitung 30 wieder von oben in den Naßwäscher 26 zur erneuten Berieselung der Abgase. Die bei der Reinigung bzw. Neutralisation aus der Waschflüssigkeit 27 entzogenen Stoffe werden als neutralisierter Schlamm, beispielsweise Gips, durch eine unten liegende Schleuse 31 dem Umlaufsammelbehälter 29 entzogen.

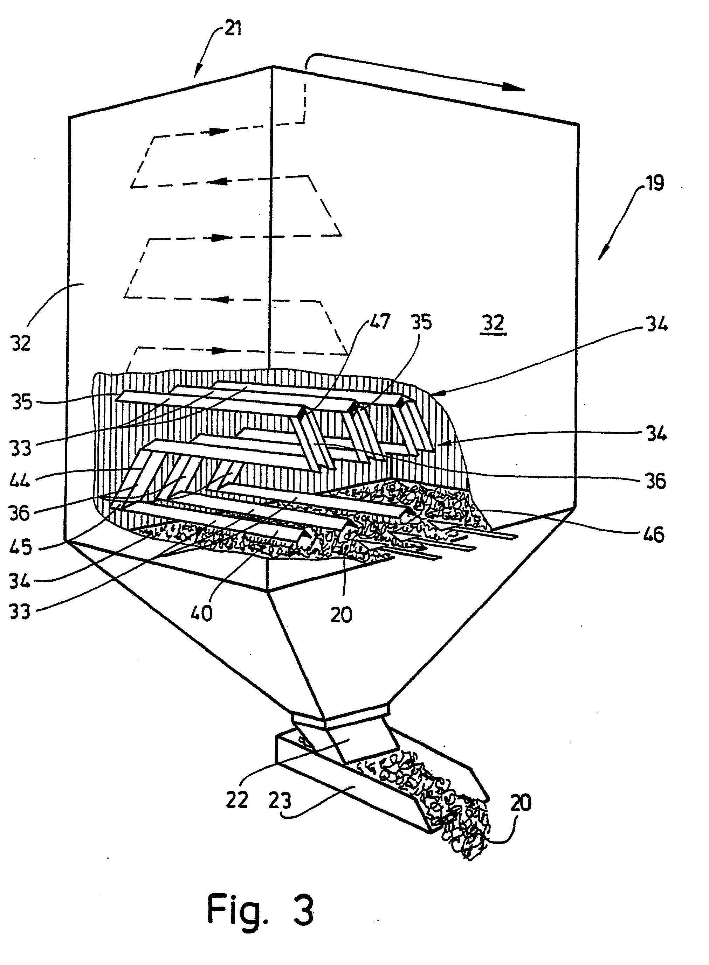

Der konstruktive Aufbau eines Ausführungsbeispiels des Bunkers 19 geht aus der Fig. 3 hervor. Hier weist der Bunker 19 einen quadratischen Querschnitt auf, gebildet aus vier aufrechten Seitenwänden 32. Im unteren Bereich ist der Bunker 19 trichterförmig verengt zum Auslauf 22 hin, der in diesem Ausführungsbeispiel ebenfalls einen quadratischen Querschnitt aufweist. Oben kann der Bunker 19 völlig unverschlossen sein zur Bildung der großflächigen Öffnung 21.

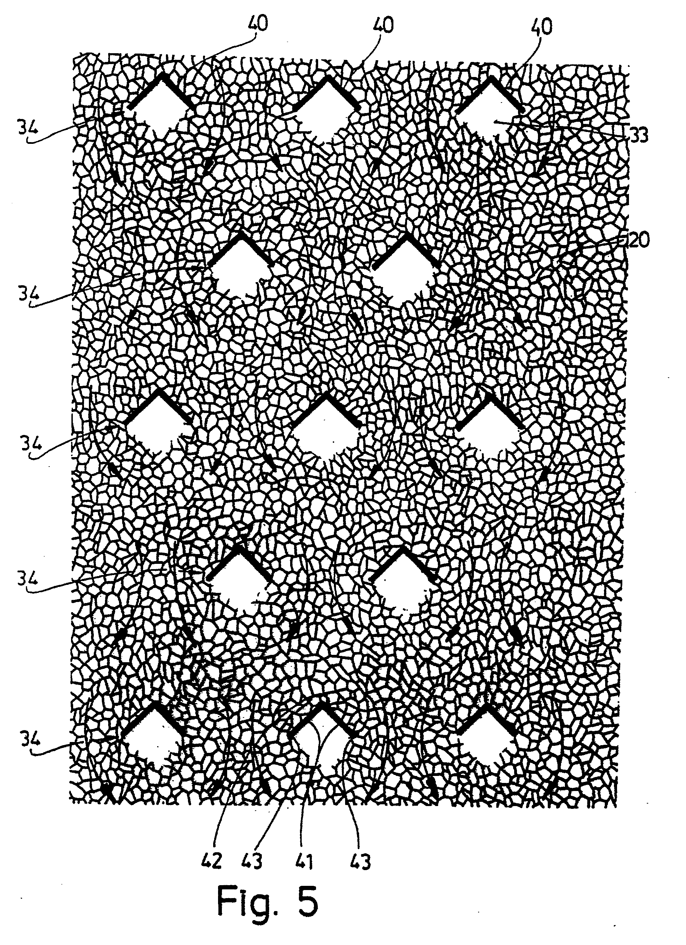

Im Hauptteil des Bunkers 19, der durch die aufrechten Seitenwände 32 gebildet ist, befindet sich eine Vielzahl horizontaler Strömungskanäle 33. Im vorliegenden Ausführungsbeispiel sind im Bunker 19 acht Kanalebenen 34 aus je drei mit Abstand parallel nebeneinanderliegenden Strömungskanälen 33 angeordnet. Wie die Fig. 5 deutlich zeigt, sind die einzelnen aufeinanderfolgenden Kanalebenen 34 versetzt zueinander, und zwar jeweils um den halben Abstand zweier nebeneinanderliegender Strömungskanäle 33 in einer Kanalebene. Dadurch sind die einzelnen Strömungskanäle 33 auf "Lücke" liegend annähernd gleichmäßig im Inneren des Bunkers 19 verteilt. Verbunden sind die Strömungskanäle 33 von einer Kanalebene 34 zur anderen in ihren gegenüberliegenden Stirnseiten 35 durch jeweils einen Überströmkanal 36. Die Abgase laufen also etagenweise über die Überströmkanäle 36 von einem Strömungskanal 33 zum jeweils höher gelegenen Strömungskanal 33 einer anderen Kanalebene 34.

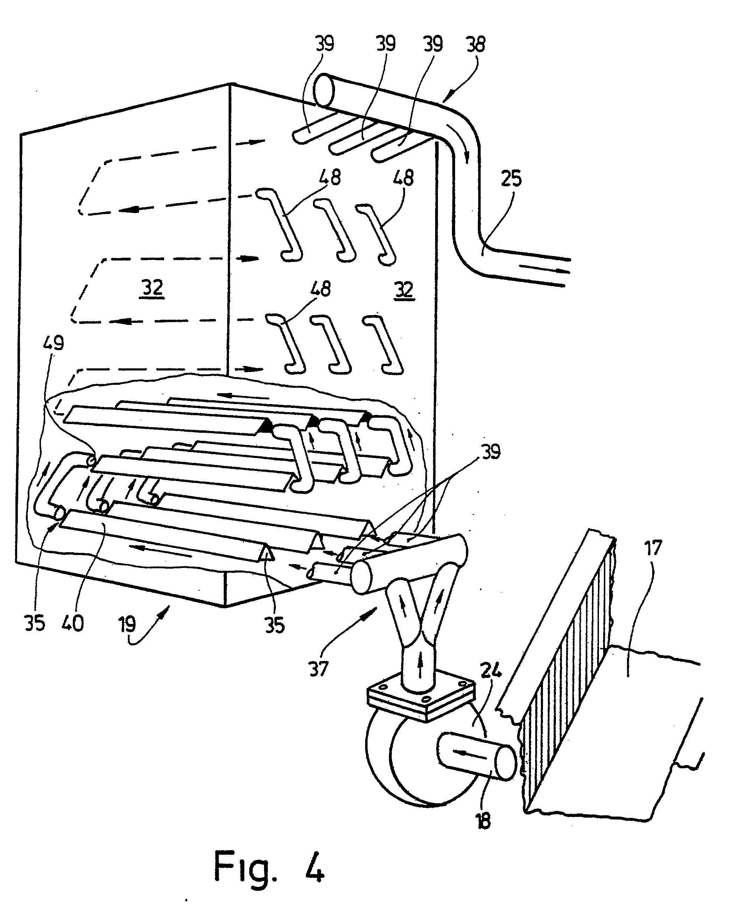

Jeder der drei Strömungskanäle 33 der unteren Kanalebene 34 wird an einer Stirnseite 35 direkt von der Abgaszufuhrleitung 18 mit heißen Abgasen versorgt. Dazu weist die Abgaszufuhrleitung 18 vor ihrer Mündung im Bunker 19 eine dreifache Abzweigung 37 auf, wie die Fig. 4 zeigt. Auch die der oberen Kanalebene 34 zugeordnete Abgasabfuhrleitung 25 weist eine Abzweigung 38 auf, die mit einer Stirnseite der drei obersten Strömungskanäle 33 im Bunker 19 in Verbindung steht. Dadurch sind im vorliegenden Ausführungsbeispiel drei unabhängige, aufrecht liegende Abgaskreisläufe 39 im Bunker 19 gebildet.

Jeder Strömungskanal 33 ist in dem vorliegenden Ausführungsbeispiel in etwa gleich ausgebildet, und zwar in besonders einfacher Weise aus einem länglichen, gleichschenkligen Winkelprofil 40. Die Anordnung der Winkelprofile 40 für die Strömungskanäle 33 ist im Bunker 19 derart getroffen, daß die beiden Schenkel 41 in etwa unter einem gleichen Winkel liegen, nämlich ca. 45°, mit oben liegender Scheitelkante 42. Dadurch liegen die beiden parallelen, unteren freien Kanten 43 der Schenkel 41 in etwa in einer horizontalen Ebene. Die Winkelprofile 40 der einzelnen Strömungskanäle 33 bilden so ein Dach für das Glasscherbengemisch 20 im Bunker 19. Dadurch bildet sich unterhalb der Winkelprofile 40 ein Schüttkegel im Glasscherbengemisch 20 aus, der die zweite Hälfte der Strömungskanäle 33 bildet. Wie die Fig. 5 anschaulich zeigt, weisen die Strömungskanäle 33 einen in etwa rautenförmigen Querschnitt auf. Dieser entsteht in der oberen Hälfte durch den inneren Querschnitt eines Winkelprofils 40 und in der unteren Hälfte durch den Schüttkegel des Glasscherbengemisches 20. Die Randfläche eines jeden Strömungskanals 33 wird auf diese Weise zur (unteren) Hälfte unmittelbar durch das Glasscherbengemisch 20 gebildet.

Aus einem Profilmaterial sind im Ausführungsbeispiel der Fig. 3 auch die Überströmkanäle 36 gebildet, nämlich aus einem U-Profil 44. Dieses ist jeweils zwischen zwei in etwa übereinanderliegenden Strömungskanälen 33 mit den offenen Seiten zu denjenigen Seitenwänden 32 des Bunkers 19, die zu den Stirnseiten 35 der Strömungskanäle 33 gerichtet sind. Dadurch bildet jeweils eine Seitenwand 32 des Bunkers 19 die vierte Wandung des im Querschnitt rechteckförmigen Überströmkanals 36.

Der Gaseintritt von diesen im Inneren des Bunkers 19 angeordneten Überströmkanälen 36 zu den offenen Stirnseiten 35 der Strömungskanäle 33 erfolgt in unterschiedlicher Weise. Die von unten an das Winkelprofil 40 herangeführten U-Profile 44 der Überströmkanäle 36 münden unmittelbar unter den Winkelprofilen 40, die an dieser Seite mit ihrer Stirnseite 35 direkt an der Innenseite der ihr zugeordneten Seitenwand 32 des Bunkers 19 angebracht sind. Die gegenüberliegende Stirnseite 35 der Winkelprofile 40 ist dagegen dem Steg 45 des U-Profils 44 der Überströmkanäle 36 zugeordnet, also nicht direkt einer Seitenwand 32. Entsprechend dem Innenquerschnitt des Winkelprofils 40 sind ausgehend vom unteren Ende der nach oben führenden Überströmkanäle 36, nämlich im Steg 45, dreieckförmige Ausschnitte 46 angeordnet zur Anpassung der Übergänge der Strömungskanäle 33 zu den nach oben führenden Überströmkanälen 36 an den Querschnitt der Strömungskanäle 33. Ein ähnlicher Ausschnitt 47 kann auch im oberen Ende des unterhalb des Winkelprofils 40 mündenden Überströmkanals 36 angeordnet sein.

Das in der Fig. 4 dargestellte zweite Ausführungsbeispiel des Bunkers 19 unterscheidet sich von dem vorangehend beschriebenen Ausführungsbeispiel lediglich im Aufbau der Überströmkanäle 48. Diese sind nämlich nicht im Inneren des Bunkers 19 angeordnet, sondern außerhalb desselben. Dazu sind in diesem Ausführungsbeispiel die Winkelprofile 40 für die Strömungskanäle 33 zwischen zwei gegenüberliegenden Seitenwänden 32 im Bunker 19 angeordnet. Die außerhalb des Bunkers 19 liegenden Überströmkanäle 48 bestehen aus U-förmig gebogenen Rohren, die entsprechend den Strömungskanälen 33 im Bunker 19 zugeordneten Gasdurchtrittsöffnungen 49 in den Seitenwänden 32 zugeordnet sind.

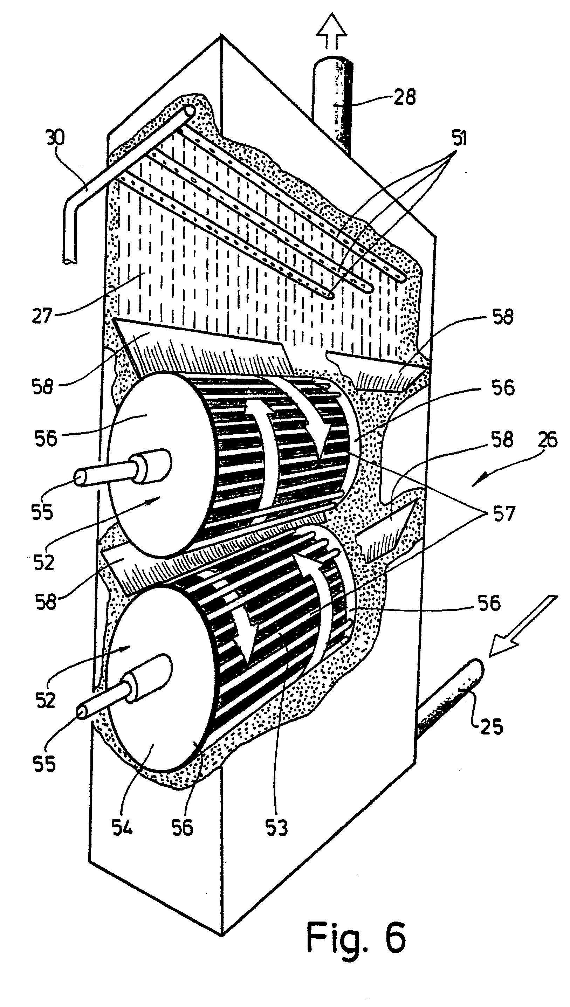

Den Aufbau des Naßwäschers 26 zeigt anschaulich die Fig. 6. Dieser weist demnach ein längliches, aufrechtes Gehäuse 50 rechteckförmigen Querschnitts auf. An der Oberseite des Gehäuses 50 befinden sich drei langgestreckte, horizontale Rohre mit einer Vielzahl unterer Düsen 51 zur Erzeugung eines gleichmäßig auf den Querschnitt des Gehäuses 50 verteilten Flüssigkeitsschleiers aus Waschflüssigkeit 27. Im mittleren Bereich des Naßwäschers 26 sind innerhalb des Gehäuses 50 zwei übereinanderliegende Desintegratoren 52 angeordnet. Jeder der beiden Desintegratoren 52 besteht aus zwei ineinanderliegenden Zylindertrommeln unterschiedlicher Größe, nämlich einer kleineren inneren Trommel 53 und einer größeren äußeren Trommel 54. Beide Trommeln 53, 54 rotieren um eine gemeinsame, horizontale Drehachse 55, jedoch in entgegengesetzten Richtungen. Aufgebaut sind die beiden Trommeln 53 und 54 in prinzipiell gleicher Weise aus zwei mit Abstand angeordneten kreisförmigen Trommelböden 56, deren Trommelmantel durch eine Vielzahl mit Abstand voneinander liegender, längsgerichteter Stäbe 57 gebildet ist. Die Verteilung der Stäbe 57 auf den Umfang der Trommeln 53, 54 kann, wie in der Fig. 6 dargestellt, ungleichmäßig erfolgen, so daß der Umfang der Trommeln 53 und/oder 54 teilweise frei bleibt.

Der Antrieb der Trommeln 53 und 54 ist in den Figuren nicht dargestellt. Dieser ist zweckmäßigerweise außerhalb des Gehäuses 50 des Naßwäschers 26 angeordnet. Dabei kann entweder jeder Trommel 53 und 54 ein eigener Antriebsmotor zugeordnet sein oder alternativ der Antrieb von einem einzigen Antriebsmotor aus erfolgen, dem dann ein entsprechendes Getriebe zuzuordnen ist.

Im vorliegenden Ausführungsbeispiel sind den äußeren Trommeln 54 der beiden Desintegratoren 52 jeweils zwei gegenüberliegende, schräggerichtete Kämme 58 zugeordnet, die vorzugsweise flexibel ausgebildet sind und am Außenumfang der Desintegratoren 52 angreifen. Durch diese Kämme 58 soll einerseits die Waschflüssigkeit 27 auf die Desintegratoren 52 geleitet werden und andererseits gleichzeitig eine Reinigung derselben erfolgen.

Am unteren Ende weist das Gehäuse 50 des Naßwäschers 26 eine trichterartige Verengung auf, an der eine Zuführleitung 59 für die sich unten im Naßwäscher 26 sammelnde Waschflüssigkeit 27 angeordnet ist. Über diese Zuführleitung 59 gelangt die Waschflüssigkeit 27 in den Umlaufsammelbehälter 29. Dieser weist im unteren Bereich ebenfalls eine trichterförmige Verengung auf, der zwei Austrittsöffnungen zugeordnet sind, nämlich zum einen eine seitliche Austrittsöffnung 60 für die Zulaufleitung 30 der gereinigten Waschflüssigkeit 27 zum Naßwäscher 26 und eine untere, zur unterhalb des Umlaufsammelbehälters 29 angeordneten Schleuse 31 führende Austrittsöffnung 61. Im vorliegenden Ausführungsbeispiel ist in der Zulaufleitung 30 der vom Umlaufsammelbehälter 29 kommenden Waschflüssigkeit 27 zum Naßwäscher 26 eine Pumpe 62 od. dgl. angeordnet. Diese Pumpe 62 fördert die Waschflüssigkeit 27 im aufrecht liegenden, geschlossenen Kreislauf.

## Patentansprüche

1. Verfahren zum Vorwärmen eines vorzugsweise mit Rohstoffen zur Glasherstellung angereicherten Glasscherbengemenges (20), wobei Abgas aus einem Glasschmelzofen (10) durch das Glasscherbengemenge (20) und ggf. die eingemischten Rohstoffe geleitet wird zum Vorwärmen mindestens des Glasscherbengemenges (20), dadurch gekennzeichnet, daß das Abgas aus dem Glasschmelzofen (10) zunächst durch einen Wärmeaustauscher (Regenerator 13) geleitet wird zum Vorwärmen frischer Verbrennungsluft für den Glasschmelzofen (10) und anschließend durch das in einem Bunker (19) zwischengelagerte Glasscherbengemenge (20) mittels einer Mehrzahl von Strömungskanälen (33) geleitet wird.

2. Verfahren nach Anspruch 1, dadurch gekennzeichnet, daß das Abgas durch eine Mehrzahl miteinander verbundener Strömungskanäle (33) im Kreuzgegenstrom das Glasscherbengemisch (20) im Bunker (19) durchströmt, wobei das Glasscherbengemisch (20) kontinuierlich dem Bunker (19) entnommen wird.

3. Verfahren nach Anspruch 1 oder 2, dadurch gekennzeichnet, daß der Wärmeaustauscher als Regenerator (13) ausgebildet ist.

4. Verfahren nach Anspruch 1, dadurch gekennzeichnet, daß das Abgas mit etwa 400°C bis 600°C in den Bunker (19) eingeleitet und mit weniger als 100°C aus dem Bunker (19) herausgeleitet wird.

5. Verfahren nach Anspruch 1, dadurch gekennzeichnet, daß den durch den Regenerator (13) geleiteten Abgasen aus dem Glasschmelzofen (10) bzw. der Schmelzwanne (11) heißere Abgase, insbesondere direkt aus der Schmelzwanne (11) austretende Abgase, zugemischt werden zur Erhöhung der Temperatur der dem Bunker (19) zugeführten Abgase.

6. Verfahren nach einem oder mehreren der Ansprüche 1 bis 5, dadurch gekennzeichnet, daß das mit einer Temperatur unter 100°C aus dem Bunker (19) austretende Abgas kondensiert und/oder gereinigt wird, insbesondere durch einen Naßwäscher (26).

7. Verfahren nach Anspruch 6, dadurch gekennzeichnet, daß das Abgas im Gegenstrom im Naßwäscher (26) mit Waschflüssigkeit (27) berieselt wird mit von oben in den Naßwäscher (26) eingeleiteter Waschflüssigkeit (27) und von unten in denselben eingeleitetem Abgas.

8. Verfahren nach Anspruch 6 oder 7, dadurch gekennzeichnet, daß die Reinigung der Abgase im Naßwäscher (26) durch mindestens ein mechanisches Mischorgan, insbesondere einen Desintegrator (52), aktiviert wird.

9. Verfahren nach Anspruch 6 oder 7, dadurch gekennzeichnet, daß der Waschflüssigkeit (27) im Naßwäscher (26) chemische Mittel, insbesondere Neutralisationsmittel wie Kalkmilch und/oder Ammoniak, zur Neutralisation der aus den dem Abgas entzogenen Schadstoffen in der Waschflüssigkeit (27) gebildeten Säuren (Schwefelsäure etc.) zugesetzt werden.

10. Verfahren nach Anspruch 6 oder 7, dadurch gekennzeichnet, daß die Waschflüssigkeit (27) in einem geschlossenen Kreislauf durch den Naßwäscher (26) hindurchgeleitet wird.

11. Verfahren nach Anspruch 10, dadurch gekennzeichnet, daß die Waschflüssigkeit (27) im Kreislauf durch einen Umlaufsammelbehälter (29) geleitet wird, aus dem der (Neutralisations-)-Schlamm dekantiert und abgezogen wird.

12. Vorrichtung zum Vorwärmen eines vorzugsweise mit Rohstoffen zur Glasherstellung angereicherten Glasscherbengemenges (22) mit einer Vorwärmeinrichtung (Bunker 19) und darin gebildeten Strömungskanälen (33), dadurch gekennzeichnet, daß die Vorwärmeinrichtung als ein das vorzuwärmende Glasscherbengemenge (20) und ggf. zusätzliche Rohstoffe aufnehmender Bunker (19) mit darin angeordneten Strömungskanälen (33) ausgebildet ist, und jeder Strömungskanal (33) aus einem zur Bildung der oberen Hälfte desselben dienenden Abdeckprofil (Winkelprofil 40) sowie einen sich unter demselben ausbildenden Schüttkegel aus dem Glasscherbengemenge (20) und ggf. der darin enthaltenen Rohstoffe gebildet ist.

13. Vorrichtung nach Anspruch 12, dadurch gekennzeichnet, daß mehrere mit Abstand parallel zueinander laufende, horizontale Kanalebenen (34) aus nebeneinanderliegenden Strömungskanälen (33) im Bunker (19) angeordnet sind und die Strömungskanäle (33) einer Kanalebene (34) mit denselben der angrenzenden Kanalebenen (34) durch mindestens einen Überströmkanal (36; 48) verbunden sind.

14. Vorrichtung nach Anspruch 12 oder 13, dadurch gekennzeichnet, daß die Strömungskanäle (33) aufeinanderfolgender Kanalebenen (34) versetzt zueinander (auf Lücke) angeordnet sind.

15. Vorrichtung nach Anspruch 14, dadurch gekennzeichnet, daß jede Kanalebene (34) eine gleiche Anzahl von Strömungskanälen (33) aufweist und jeder Strömungskanal (33) durch einen (schräggerichteten) Überströmkanal (36; 48) mit der angrenzenden Kanalebene (34) bzw. den angrenzenden Kanalebenen (34) verbunden ist.

16. Vorrichtung nach Anspruch 12, dadurch gekennzeichnet, daß die Winkelprofile (40) der Strömungskanäle (33) horizontalliegend einerseits an einer Seitenwand (32) des Bunkers (19) und andererseits an einem nach oben führenden Überströmkanal (36) im Inneren des Bunkers (19) fest angeordnet sind.

17. Vorrichtung nach Anspruch 16, dadurch gekennzeichnet, daß die Überströmkanäle (36) aus einem mit der offenen Seite innen an der entsprechenden Seitenwand (32) des Bunkers (19) schräggerichtet befestigten U-Profil (44) gebildet sind, wobei die offenen Stirnseiten (35) des U-Profils (44) in jeweils einen Strömungskanal (33) zweier unterschiedlicher Kanalebenen (34) münden.

18. Vorrichtung nach Anspruch 12, dadurch gekennzeichnet, daß die Winkelprofile (40) der Strömungskanäle (33) horizontal zwischen zwei gegenüberliegenden, aufrechten Seitenwänden (32) des Bunkers (19) fest angeordnet sind und die Überströmkanäle (48) zwischen zwei Strömungskanälen (33) unterschiedlicher Kanalebenen (34) außen an den Seitenwänden (32) des Bunkers (19) angeordnet sind, wobei jeweils zwischen einem Strömungskanal (33) und einem Überströmkanal (48) eine Gasdurchtrittsöffnung (49) in den entsprechenden Seitenwänden (32) des Bunkers (19) angeordnet ist.

19. Vorrichtung nach einem oder mehreren der Ansprüche 12 bis 18 dadurch gekennzeichnet, daß eine von einem Abgaskanal (17) des Glasschmelzofens (10) abzweigende Abgaszufuhrleitung (18) zum Bunker (19) geführt ist mit einer Abzweigung (37), die durch entsprechende Öffnungen in einer Seitenwand (32) des Bunkers (19) zu jedem Strömungskanal (33) der unteren Kanalebene (34) desselben führt.

20. Vorrichtung nach einem oder mehreren der Ansprüche 12 bis 18, dadurch gekennzeichnet, daß eine Abgasabfuhrleitung (25) eine Abzweigung (38) aufweist, die mit einer Mündung für jeden Strömungskanal (33) der oberen Kanalebene (34) versehen ist.

21. Vorrichtung nach Anspruch 20, dadurch gekennzeichnet, daß in der Abgasabfuhrleitung (25) ein Naßwäscher (26) vorgesehen ist worin das aus dem Bunker (19) austretende Abgas kondensiert und/oder gereinigt wird und im Naßwäscher (26) mindestens ein Desintegrator (52) angeordnet ist aus zwei ineinandergeschalteten und um eine mittige, horizontale Drehachse (55) lüfterartig gegenläufig rotierenden Zylinderkäfigen (Trommel 53; 54) unterschiedlichen Durchmessers mit gleichmäßig am Umfang derselben mit Abstand angeordneten, parallel zur Drehachse (55) verlaufenden Stäben (57), die gruppenweise mit je einem Paar stirnseitig angeordneter, kreisförmiger Trommelböden (56) fest verbunden sind.

22. Vorrichtung nach Anspruch 21, dadurch gekennzeichnet, daß jedem Desintegrator (52) am äußeren Umfang wenigstens zwei (elastische) Kämme (58) zugeordnet sind.

23. Vorrichtung nach Anspruch 20, dadurch gekennzeichnet, daß unterhalb des Naßwäschers (26) ein Umlaufsammelbehälter (29) im Kreislauf der Waschflüssigkeit (27) angeordnet ist.

24. Vorrichtung nach Anspruch 23, dadurch gekennzeichnet, daß unterhalb des Umlaufsammelbehälters (29) eine Schleuse (31) zum Abziehen des in demselben ausgefällten (Neutralisations-)Schlamms angeordnet ist.

## Claims

1. Method for pre-heating a cullet mixture (20), which is preferably enriched with raw materials for the production of glass, in which method waste gas from a gas melting furnace (10) is conducted through the cullet mixture (20) and possibly the raw materials mixed in, for pre-heating at least the cullet mixture (20), characterized in that the waste gas from the glass melting furnace (10) is first conducted through a heat exchanger (regenerator 13) for pre-heating fresh combustion air for the glass melting furnace (10) and is subsequently conducted through the cullet mixture (20), which is temporarily stored in a bunker (19), by means of a plurality of flow ducts (33).

2. Method according to Claim 1, characterized in that the waste gas flows through the cullet mixture (20) in the bunker (19) in a cross-counter flow through a plurality of flow ducts (33) which are joined to each other, the cullet mixture (20) being continually drawn off from the bunker (19).

3. Method according to Claim 1 or 2, characterized in that the heat exchanger is constructed as a regenerator (13).

4. Method according to Claim 1, characterized in that the waste gas is introduced into the bunker (19) at about 400°C to 600°C and is conducted out of the bunker (19) at less than 100°C.

5. Method according to Claim 1, characterized in that hotter waste gases, particularly waste gases emerging directly from the melting end (11), are added to the waste gases from the glass melting furnace (10) or the melting end (11), conducted through the regenerator (13), for increasing the temperature of the waste gases supplied to the bunker (19).

6. Method according to one or more of Claims 1 to 5, characterized in that the waste gas emerging from the bunker (19) at a temperature of below 100°C is condensed and/or cleaned, particularly by a wet scrubber (26).

7. Method according to Claim 6, characterized in that the waste gas is sprayed with washing fluid (27) in counter flow in the wet scrubber (26) with the washing fluid (27) being introduced into the wet scrubber (26) from the top and the waste gas being introduced into the latter from the bottom.

8. Method according to Claim 6 or 7, characterized in that the cleaning of the waste gases in the wet scrubber (26) is activated by at least one mechanical mixing element, particularly a disintegrator (52).

9. Method according to Claims 6 or 7, characterized in that chemical means, particularly neutralizing agents such as milk of lime and/or ammonia are added to the washing fluid (27) in the wet scrubber (26) for neutralizing the acids (sulphuric acid and so forth) formed in the washing fluid (27) from the pollutants removed from the waste gas.

10. Method according to Claims 6 or 7, characterized in that the washing fluid (27) is conducted through the wet scrubber (27) in a closed circuit.

11. Method according to Claim 10, characterized in that the washing fluid (27) is conducted in a circuit through a recirculating collecting tank (29) from which the (neutralization) sludge is decanted and drained.

12. Device for pre-heating a cullet mixture (22), which is preferably enriched with raw materials for the production of glass, by means of a pre-heating device (bunker 19) and flow ducts (33) which are formed in the latter, characterized in that the pre-heating device is constructed as a bunker (19), which accommodates the cullet mixture (20) to be pre-heated and possibly additional raw materials, with flow ducts (33) which are arranged in the bunker, and each flow duct (33) is formed of a cover section (angle section 40) which is used for forming the upper half of the duct and a bulk cone of the cullet mixture (20) and possibly the raw materials contained in it, which forms below the cover section.

13. Device according to Claim 12, characterized in that several horizontal duct levels (34) of adjacent flow ducts (33), which extend at a distance in parallel with each other, are arranged in the bunker (19) and the flow ducts (33) of a duct level (34) are connected by at least one overflow duct (36; 48) to those of the adjoining duct levels (34).

14. Device according to Claim 12 or 13, characterized in that the flow ducts (33) of successive duct levels (34) are arranged to be offset (staggered) with respect to each other.

15. Device according to Claim 14, characterized in that each duct level (34) has an identical number of flow ducts (33) and each flow duct (33) is connected by an (oblique) overflow duct (36; 48) to the adjoining duct level (34) or the adjoining duct levels (34).

16. Device according to Claim 12, characterized in that the angle sections (40) of the flow ducts (33) are permanently arranged in horizontal position, on the one hand, at a side wall (32) of the bunker (19) and, on the other hand, at an overflow duct (36) which leads upwards on the inside of the bunker (19).

17. Device according to Claim 16, characterized in that the overflow ducts (36) are from a U-section (44) which is mounted obliquely with the open side on the inside at the corresponding side wall (32) of the bunker (19), in which arrangement the open ends (35) of the U-section (44) open in each case into a flow duct (33) of two different duct levels (34).

18. Device according to Claim 12, characterized in that the angle sections (40) of the flow ducts (33) are permanently arranged horizontally between two opposite perpendicular side walls (32) of the bunker (19) and the overflow ducts (48) are arranged between two flow ducts (33) of different duct levels (34) on the outside at the side walls (32) of the bunker (19), in which arrangement in each case a gas passage opening (49) is arranged between a flow duct (33) and an overflow duct (48) in the corresponding side walls (32) of the bunker (19).

19. Device according to one or more of Claims 12 to 18, characterized in that a waste-gas supply line (18), which branches away from a waste-gas duct (17) of the glass melting furnace (10), is extended to the bunker (19) and has a branch (37) which leads through appropriate openings in a side wall (32) of the bunker (19) to each flow duct (33) of the lower duct level (34).

20. Device according to one or more of Claims 12 to 18, characterized in that a waste gas removal line (25) has a branch (38) which is provided with an opening for each flow duct (33) of the upper duct level (34).

21. Device according to Claim 20, characterized in that in the waste gas removal line (25) a wet scrubber (26) is provided in which the waste gas emerging from the bunker (19) is condensed and/or purified and at least one disintegrator (52) is arranged in the wet scrubber (26), this disintegrator consisting of two cylindrical cages (drum 53; 54) of different diameters, which are arranged inside each other and rotate in opposite directions like a ventilator around a central horizontal axis of rotation (55) and which have rods (57) which are uniformly arranged at a distance at the circumference of these cages and extend parallel to the axis of rotation (55), and are permanently joined in groups to one pair of circular drum bottoms (56) each arranged at the ends.

22. Device according to Claim 21, characterized in that each disintegrator (52) is associated at its external circumference with at least two (elastic) combs (58).

23. Device according to Claim 29, characterized in that a recirculating collecting tank (29) is arranged below the wet scrubber (26) in the circuit of the washing fluid (27).

24. Device according to Claim 23, characterized in that a discharge valve (31) for draining the (neutralization) sludge precipitated in the recirculating collecting tank (29) is arranged below this tank.

**Revendications**

1. Procédé de préchauffage d'une composition à base de groisil (20), de préférence enrichie de matières premières pour la fabrication du verre, dans lequel du gaz résiduaire provenant d'un four de fu-

sion de verre (10) est conduit au travers de la composition à base de groisil (20) et éventuellement des matières premières qui y sont mélangées, pour le préchauffage au moins de la composition à base de groisil (20), caractérisé en ce que le gaz résiduaire provenant du four de fusion de verre (10) est conduit tout d'abord au travers d'un échangeur de chaleur (régénérateur 13) pour le préchauffage d'air de combustion frais pour le four de fusion de verre (10) et ensuite, au moyen d'une multiplicité de canaux d'écoulement (33), à travers la composition à base de groisil (20) entreposée de manière intermédiaire dans une trémie (19).

2. Procédé suivant la revendication 1, caractérisé en ce que le gaz résiduaire passant par un grand nombre de canaux d'écoulement (33) mutuellement reliés traverse en contre-courant croisant le mélange de groisil (20) dans la trémie (19), le mélange de groisil (20) étant prélevé en continu de la trémie (19).

3. Procédé suivant l'une des revendications 1 et 2; caractérisé en ce que l'échangeur de chaleur est réalisé sous la forme d'un régénérateur (13).

4. Procédé suivant la revendication 1, caractérisé en ce que le gaz résiduaire est introduit dans la trémie (19) à environ 400 jusqu'a 600°C et est sorti de la trémie (19) à moins de 100°C.

5. Procédé suivant la revendication 1, caractérisé en ce que, pour augmenter la température des gaz résiduaires amenés à la trémie (19), des gaz résiduaires très chauds, en particulier des gaz résiduaires sortant directement du bassin de fusion (11), sont mélangés aux gaz résiduaires provenant du four de fusion de verre (10) et respectivement du bassin de fusion (11) et conduits à travers le régénérateur (13).

6. Procédé suivant une ou plusieurs des revendications 1 à 5, caractérisé en ce que le gaz résiduaire sortant de la trémie (19) à une température inférieure à 100°C est condensé et/ou purifié, en particulier par un laveur par voie humide (26).

7. Procédé suivant la revendication 6, caractérisé en ce que le gaz résiduaire est soumis é un ruissellement par du liquide de lavage (27) en contrecourant dans le laveur par voie humide (26), le liquide de lavage (27) étant introduit par le haut dans le laveur par voie humide (26) et le gaz résiduaire étant introduit dans celui-ci par le bas.

8. Procédé suivant l'une ou l'autre des revendications 6 et 7, caractérisé en ce que la purification des gaz résiduaires dans le laveur par voie humide (26) est activée par au moins un organe mélangeur mécanique, en particulier par un désintégrateur (52).

9. Procédé suivant l'une des revendications 6 et 7, caractérisé en ce qu'au liquide de lavage (27) du laveur par voie humide (26) on ajoute des agents chimiques, en particulier des agents de neutralisation tels que du lait de chaux et/ou de l'ammoniac, pour la neutralisation des acides (acide sulfurique, etc.) formés dans le liquide de lavage (27) par les substances nuisibles soutirées de gaz résiduaire.

10. Procédé suivant l'une des revendications 6 et 7, caractérisé en ce que le liquide de lavage (27) est passé au travers du laveur par voie humide (26) suivant un circuit fermé.

11. Procédé suivant la revendication 10, caractérisé en ce que le liquide de lavage (27) est guidé suivant un circuit au travers d'un réservoir de récolte (29) dans lequel la boue (de neutralisation) est décantée et éliminée.

12. Dispositif de préchauffage d'une composition à base de groisil (22), de préférence enrichie en matières premières pour la fabrication du verre, comprenant un dispositif de préchauffage (trémie 19) et des canaux d'écoulement (33) formés dedans, caractérisé en ce que le dispositif de préchauffage est réalisé sous la forme d'une trémie (19) qui reçoit la composition à base de groisil (20) à préchauffer et éventuellement des matières premières supplémentaires et qui comporte des canaux d'écoulement (33) agencés dedans et en ce que chaque canal d'écoulement (33) est formé d'un profilé de recouvrement (profilé angulaire 40) servant à former la moitié supérieure de ce canal ainsi qu'un cône d'écoulement réalisé en dessous de ce profilé et constitué de la composition à base de groisil (20) et éventuellement des matières premières contenues dans celle-ci.

13. Dispositif suivant la revendication 12, caractérisé en ce que plusieurs plans de canaux (34) horizontaux, disposés parallèlement l'un à l'autre à une certaine distance et constitués de canaux d'écoulement (33) agencés l'un à côté de l'autre sont disposés dans la trémie (19) et en ce que les canaux d'écoulement (33) d'un plan de canaux (34) sont reliés à ceux des plans de canaux voisins (34) par au moins un canal de passage (36; 48).

14. Dispositif suivant l'une des revendications 12 et 13, caractérisé en ce que les canaux d'écoulement (33) de plans de canaux (34) successifs sont agencés de manière mutuellement décalée (sur des vides).

15. Dispositif suivant la revendication 14, caractérisé en ce que chaque plan de canaux (34) présente un grand nombre de canaux d'écoulement (33) et en ce que chaque canal d'écoulement (33) est, par un canal de passage (36; 48) (orienté de manière inclinée), relié au plan de canaux voisin (34) ou respectivement aux plans de canaux voisins (34).

16. Dispositif suivant la revendication 12, caractérisé en ce que les profilés angulaires (40) des canaux d'écoulement (33) sont agencés horizontalement de manière fixe à l'intérieur de la trémie (19), d'une part, sur une paroi latérale (32) de la trémie (19) et, d'autre part, sur un canal de passage (36) guidant vers le haut.

17. Dispositif suivant la revendication 16, caractérisé en ce que les canaux de passage (36) sont formés d'un profilé en U (44) fixé de manière à être orienté en oblique avec le côté ouvert à l'intérieur sur la paroi latérale correspondante (32) de la trémie (19), les côtés frontaux ouverts (35) du profilé en U (44) débouchant chacun dans un canal d'écoulement (33) de deux plans de canaux différents (34).

18. Dispositif suivant la revendication 12, caractérisé en ce que les profilés angulaires (40) des canaux d'écoulement (33) sont agencés horizontalement de manière fixe entre deux parois latérales (32) verticales, opposées, de la trémie (19) et en ce que les canaux de passage (48) entre deux canaux d'écoulement (33) de plans de canaux différents (34) sont agencés à l'extérieur sur les parois latérales (32) de la trémie (19), une ouverture de passage de gaz (49) étant chaque fois agencée dans les parois latérales correspondantes (32) de la trémie (19), entre un canal d'écoulement (33) et un canal de passage (48).

19. Dispositif suivant une ou plusieurs des revendications 12 à 18, caracterisé en ce qu'un conduit d'amenée de gaz résiduaire (18) dérivant d'un canal à gaz résiduaire (17) du four de fusion de verre (10) est guidé vers la trémie (19) à l'aide d'un embranchement (37) qui conduit au travers d'ouvertures correspondantes d'une paroi latérale (32) de la trémie (19) à chaque canal d'écoulement (33) du plan de canaux inférieur (34).

20. Dispositif suivant une ou plusieurs des revendications 12 à 18, caractérisé en ce qu'un conduit de sortie de gaz résiduaire (25) présente un embranchement (38) qui est pourvu d'une embouchure pour chaque canal d'écoulement (33) du plan de canaux supérieur (34).

21. Dispositif suivant la revendication 20, caractérisé en ce qu'il est prévu dans le conduit de sortie de gaz résiduaire (25) un laveur par voie humide (26) dans lequel le gaz résiduaire sortant de la trémie (19) est condensé et/ou purifié, et en ce que, dans le laveur par voie humide (26), est agencé au moins un désintégrateur (52) constitué de deux cages cylindriques (tambours 53, 54) montées l'une dans l'autre et tournant autour d'un axe de rotation horizontal, central (55) en sens opposé à la manière d'un aérateur, ces cages présentant des diamètres différents et comportant des barres (57) qui sont agencées uniformément sur leur pourtour à une certaine distance, s'étendent parallèlement à l'axe de rotation (55) et sont reliées de manière fixe, par groupes, à chaque fois une paire de plaques de tambour (56) circulaires, agencées aux côtés frontaux.

22. Dispositif suivant la revendication 21, caractérisé en ce qu'au moins deux peignes (élastiques) (58) sont adjoints a chaque désintégrateur (52) sur le pourtour externe.

23. Dispositif suivant la revendication 20, caractérisé en ce qu'un réservoir de récolte (29) est agencé en dessous du laveur par voie humide (26) dans le circuit du liquide de lavage (27).

24. Dispositif suivant la revendication 23, caractérisé en ce qu'une écluse (31) prévue pour soutirer la boue (de neutralisation) précipitée dans le réservoir de récolte (29) est agencée en dessous de celui-ci.

Fig. 1

Fig. 2

EP 0 211 977 B1

Fig. 3

Fig. 4

Fig. 5

Fig. 6